# EUROPEAN PATENT APPLICATION

(11) **EP 1 927 917 A2**
(43) Date of publication of application: **04.06.2008**
(21) Application number: 07022767.3
(22) Date of filing: 23.11.2007
(51) Int. Cl.: G06F 3/044

(54) **Noncontact input apparatus**

(30) Priority: 28.11.2006 JP 2006319586
(71) Applicant: SMK Corporation, Tokyo 142-8511 (JP)
(72) Inventor: Yoshikawa, Osamu, 142-8511 Tokyo (JP)
(74) Representative: DTS Zürich

(57) **Abstract**

A noncontact input apparatus includes a printed wiring board (PWB) on which a plurality of self luminous devices is mounted. The PWB is covered by a translucent insulating case, and a plurality of transparent electrostatic capacitance detection electrodes is formed along a rear surface of the translucent insulating case. An input operation position of an operating body is detected based on changes in the electrostatic capacitance between the operating body, which approaches the case, and the plurality of electrostatic capacitance detection electrodes, and control is performed so as to flash multiple ones of the plurality of self luminous devices, and thereby show display a character or other graphic through the insulating case that is in accordance with the input operation position.

## Description

### Field of the Invention

The present invention relates to a noncontact input apparatus that shows a prescribed display through a translucent case in accordance with an operation position that approaches a front surface of the translucent case, and more particularly relates to a noncontact input apparatus that uses an electrostatic capacitance detection method to detect the operation position that approaches the translucent case.

### Background of the Invention

In recent years, there has been a demand to reduce the size of portable equipment, such as portable telephones, which has limited the input operation area that is provided to the front surface of the case for the purpose of inputting operation data; in turn, input operations that require pressing within such a small input operation area have become difficult to perform. Furthermore, to avoid complicating the small front surface of the case, there is a demand to show the prescribed display thereon only during the performance of an input operation-without displaying a switch input unit beforehand.

Accordingly, to solve the aforementioned problems, a noncontact input apparatus has been proposed as described in Japanese Published Unexamined Patent Application No. 2003-178657, which is hereby incorporated by reference herein in its entirety. The apparatus described in the '657 Application comprises a noncontact detecting means that detects, for example, an input operation and an input operation position only when an operating body is brought close to the case; in this noncontact input apparatus, a detection part of the noncontact detecting means is transparent and the prescribed display is shown through the case only during the detection of the input operation.

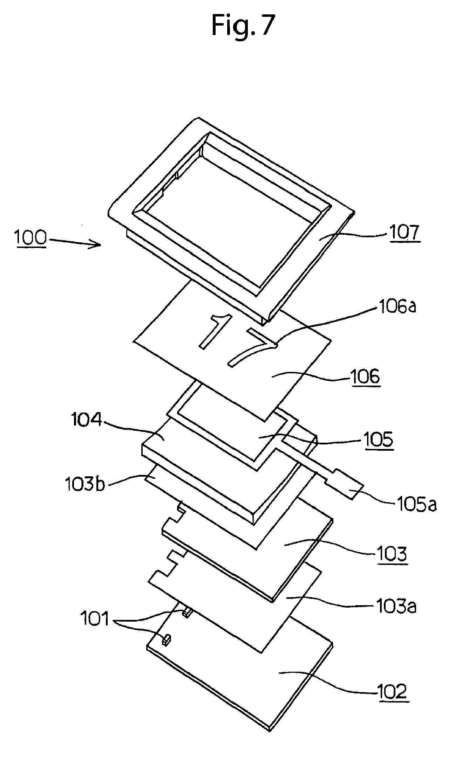

FIG. 7 is an exploded oblique view of a conventional noncontact input apparatus 100 that uses the electrostatic capacitance detection method recited in the '657 Application in order to detect the input operation noncontactually. The noncontact input apparatus 100 in FIG. 7 is an elevator touch button switch, wherein the following elements are stacked as shown in the figure in order from the inner side to the outer side of the equipment to which the noncontact input apparatus 100 is affixed: a circuit board 102, whereon LEDs 101 that are self luminous devices are mounted; a light guiding plate 103, whereto a light reflecting sheet 103a is affixed to its rear surface side and a diffusing sheet 103b is affixed to its front surface side; a transparent holding plate 104 that supports a transparent electrode 105 on its front surface side; a display panel 106, wherein a prescribed display 106a is printed; and a support frame 107 that supports the side perimeter of the front surface of the display panel 106.

The light reflecting sheet 103a is notched at the mounting positions of the LEDs 101; accordingly, the LEDs 101, which are mounted to the circuit board 102, are disposed so that they oppose one side surface of the light guiding plate 103. In addition, the transparent electrode 105 is connected to an electrostatic capacitance detection circuit (not shown), which monitors changes in the electrostatic capacitance between the transparent electrode 105 and its surroundings, via a lead-out pattern 105a.

With the noncontact input apparatus 100 configured in this manner, during standby when an input operation is not being performed on the noncontact input apparatus 100, i.e., when a finger (the operating body) is not proximate to the transparent electrode 105, there is no grounded electrode in the surroundings of the transparent electrode 105, and therefore the value of the electrostatic capacitance measured by the electrostatic capacitance detection circuit, which is connected to the transparent electrode 105, is extremely low. In this state, the LEDs 101 do not emit light and the display 106a that is printed on the display panel 106 is inconspicuous.

An input operation is performed on the noncontact input apparatus 100 by bringing a finger close to the interior of the support frame 107. The finger is regarded as an electrode that is connected to a ground potential source via the human body, and therefore electrostatic capacitance increases as the finger approaches the transparent electrode 105; if the electrostatic capacitance detected by the electrostatic capacitance detection circuit exceeds a prescribed value, then operation data that indicate the input operation performed on the noncontact input apparatus 100 are output to a processing apparatus, which is on the equipment side (not shown), and the LEDs 101 are controlled so that they emit light.

The light that is emitted by the LEDs 101 is diffused outwardly (upwardly in the figure) from the light guiding plate 103 by the diffusing sheet 103b, passes through the transparent holding plate 104 and the transparent electrode 105, and irradiates the display 106a, which is printed on the display panel 106, from its rear surface. As a result, the display 106a stands out brightly, and consequently an operator can recognize-without touching the direct noncontact input apparatus 100-the details executed as a result of the input operation and the fact that the input operation was detected.

However, because the noncontact input apparatus 100 detects an input operation based on a change in the electrostatic capacitance of a single transparent electrode 105, it can only detect whether an input operation is being performed; consequently, it cannot detect the input operation position or, based on a change thereof, the input operation direction, and it also cannot be adapted to an input apparatus that outputs operation data that differ by the type of input operation performed.

In addition, because the noncontact input apparatus 100 only detects whether an input operation is being performed, the LEDs 101, which are self luminous devices, can only illuminate the fixed display 106a, which makes the noncontact input apparatus 100 a simplistic display as it cannot show a display that varies in accordance with the type of input operation performed.

Generally, with an electrostatic capacitance detection method that detects different input operation positions noncontactually, a plurality of electrostatic capacitance detection electrodes is disposed on a board and an input operation position is detected based on changes in the electrostatic capacitances of the electrodes; however, if a plurality of electrodes is disposed on the board, the lead-out pattern that leads out from each electrode to the electrostatic capacitance detection circuit leads out to the rear surface side of the board via a through hole so that the electrode does not approach other electrodes or the operating body and thereby generate electrostatic capacitance that would cause an error. However, the board in which the through holes are formed cannot be made transparent and the transparent electrostatic capacitance detecting means that comprises the plurality of electrodes cannot be disposed on the upper side (outer side) of the light source, which comprises self luminous devices; therefore, although there is a demand to show a display on the front surface of the case that varies in accordance with the input operation position, a noncontact input apparatus that achieves this has not been obtained.

Furthermore, with the abovementioned conventional noncontact input apparatus 100, the input apparatus is indicated by the support frame 107, which is disposed on the front surface of the equipment, and a finger or the like is brought close to this support frame 107, which serves as the target of the input operation; however, with a piece of portable equipment that has been reduced in size, such as a portable telephone, it is desirable to make the small front surface of case using a simpler design, and therefore a functional display of a switch input unit degrades the external appearance of the case.

### Summary of the Invention

The present invention considers such problems of the conventional art, and it is an object of the present invention to provide a noncontact input apparatus that, only in a case wherein an input operation is performed by bringing an operating body close to a case without the usual display of a switch input unit on a front surface of the case, displays a character or a graphic through the case in accordance with that input operation position.

To achieve the abovementioned object, a noncontact input apparatus according to a first aspect of the invention comprises: a plurality of self luminous devices that is dispersed and mounted on a printed wiring board; a translucent insulating case that covers a front surface side of the printed wiring board whereon the plurality of self luminous devices is mounted; a display control circuit that displays a prescribed character or graphic by individually controlling the flashing of the plurality of self luminous devices; a plurality of transparent electrostatic capacitance detection electrodes that is formed on a rear surface of the translucent insulating case or on one surface of a transparent insulating sheet that is provided and disposed along the rear surface of the translucent insulating case; and an electrostatic capacitance position detecting means that detects an operation position of an operating body based on changes in the electrostatic capacitance between one or two or more of the electrostatic capacitance detection electrodes and the operating body that approaches the front surface of the translucent insulating case; wherein, the display control circuit displays a character or a graphic through the translucent insulating case that differs in accordance with the operation position of the operating body or changes in the operation position of the operating body detected by the electrostatic capacitance position detecting means.

Because the insulating case is translucent, the interior of the case is not externally visible when the display control circuit controls the self luminous devices so that none of them emits light. In this case, the front surface of the insulating case has a simple design wherein the switch input unit is not displayed.

Because a plurality of the electrostatic capacitance detection electrodes is formed on one surface along the rear surface of the insulating case, when an operating body is brought close to the insulating case, the electrostatic capacitance of the electrostatic capacitance detection electrode that is closest to the operating body takes on the largest value, and thereby the operation position can be detected based on the electrostatic capacitance detection electrode that exceeds a prescribed value earliest or on the relative values of the electrostatic capacitances of the electrostatic capacitance detection electrodes. Because the plurality of the electrostatic capacitance detection electrodes is disposed on one surface without the use of an insulating board wherein through holes are formed, a character or a graphic that is displayed by the flashing of multiple self luminous devices is visible from outside of the translucent insulating case.

According to a second aspect of the invention, lead-out patterns, which lead out from the electrostatic capacitance detection electrodes to the electrostatic capacitance position detecting means, on the rear surface of the translucent insulating case or one surface of the transparent insulating sheet are narrowly formed so that the electrostatic capacitance between each lead-out pattern and the operating body decreases to a level at which that electrostatic capacitance can be ignored during the detection of the operation position of the operating body.

If the operating body approaches the front surface of the case, then the electrostatic capacitance between the operating body and the lead-out pattern, which is formed from a conducting material, increases; however, because the lead-out pattern is formed narrowly, that electrostatic capacitance is of an amount that can essentially be ignored when compared with the electrostatic capacitance between the electrostatic capacitance detection electrodes and the operating body, and therefore does not affect the detection of the operation position.

According to a third aspect of the invention, the plurality of electrostatic capacitance detection electrodes is distributed and formed on the rear surface of the translucent insulating case or one surface of the transparent insulating sheet so that no electrostatic capacitance detection electrode is surrounded by other electrostatic capacitance detection electrodes. Therefore it is possible to wire the lead-out patterns, which are connected to the electrostatic capacitance position detecting means, on the same surface so that each lead-out pattern does not approach other electrostatic capacitance detection electrodes.

In the usual state wherein an input operation is not performed, the display that indicates the switch input unit is not displayed on the front surface of the case, and therefore the external appearance of the front surface of the case does not become complicated, and it is possible to make a device that comprises the noncontact input apparatus with a simple design.

In addition, because different characters and graphics are displayed through the case in accordance with the position at which the operating body approaches the case, it is possible to convey the fact that the input operation has been detected, as well as the details of that detected input operation, to the operator who has performed the input operation noncontactually.

Because an input operation direction can be detected based on changes in the detected operation position, it is also possible to display different characters and graphics through the case in accordance with the input operation direction. Accordingly, even if the number of electrostatic capacitance detection electrodes formed on one surface is limited, an input operation can output a great variety of operation data.

By forming the electrostatic capacitance detection electrodes on the same surface, without using a board wherein through holes are formed, it is possible to detect the operation position of the operating body with greater accuracy.

By providing no electrostatic capacitance detection electrode that is surrounded by other electrostatic capacitance detection electrodes, it is possible to wire each lead-out pattern, which leads out from one of the electrostatic capacitance detection electrodes to the electrostatic capacitance position detecting means, so that it does not approach other electrostatic capacitance detection electrodes. Accordingly, because the electrostatic capacitance effect of each of the lead-out patterns is small and the lead-out patterns are not affected by capacitance coupling with other electrostatic capacitance detection electrodes, it is possible to detect the operation position more accurately.

### Brief Description of the Drawings

The invention will become more readily apparent from the Detailed Description of the Invention, which proceeds with reference to the drawings, in which:
FIG. 1 is a partial exploded oblique view of a noncontact input apparatus 1 according to a first embodiment of the present invention.
FIG. 2 is a cross sectional view of the principal parts of the noncontact input apparatus 1.
FIG. 3 is a block diagram that shows the configuration of the noncontact input apparatus 1.
FIG. 4 is a plan view of a flexible wiring board 5.
FIG. 5 is a plan view of the flexible wiring board 5 that shows the state wherein the flashing of multiple light emitting diodes 3 is controlled individually based on display control signals that display right-facing triangular marks laterally at two locations.
FIG. 6 is a plan view of a flexible wiring board 22 according to another embodiment.
FIG. 7 is an exploded oblique view of a conventional noncontact input apparatus 100.
In the figures, elements that are repeatedly illustrated are consistently identified by a single reference numeral.

### Detailed Description of the Invention

The following table provides a key to the reference numerals and elements depicted in the drawings.
- 1: Noncontact input apparatus
- 2: Translucent insulating case
- 3: Light emitting diode (self luminous device)
- 4, 21: Electrostatic capacitance detection electrodes
- 5, 22: Flexible wiring boards (transparent insulating sheets)
- 6, 23: Lead-out patterns
- 7: Printed wiring board
- 9A: Electrostatic capacitance position detection circuit (electrostatic capacitance position detecting means)
- 9B: Display control circuit

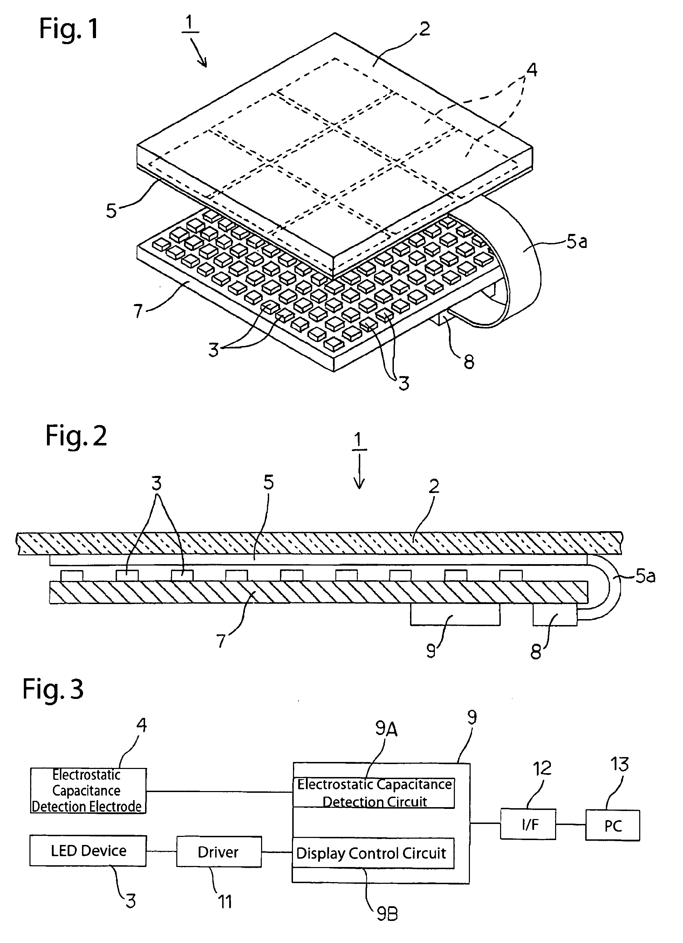

A noncontact input apparatus 1 according to one embodiment of the present invention will now be explained, referencing FIG. 1 through FIG. 5. FIG. 1 is a partial exploded oblique view of the noncontact input apparatus 1, and FIG. 2 is a cross sectional view of the principal parts thereof. In both of these figures, reference symbol 2 is an insulating case that also serves as part of the casing of a portable telephone, and the area that is shown, which includes the noncontact input apparatus 1, is translucent. A prescribed pigment may be added to a transparent plastic material, which is acrylic, ABS, or the like, of a translucent insulating case 2, at least the light that is emitted from light emitting diodes (LEDs) 3 (discussed later) is passed therethrough, and thereby the light transmittance is adjusted to a level wherein the interior (lower part in FIG. 2) of the insulating case 2 is not visible while all of the light emitting diodes 3 are turned off.

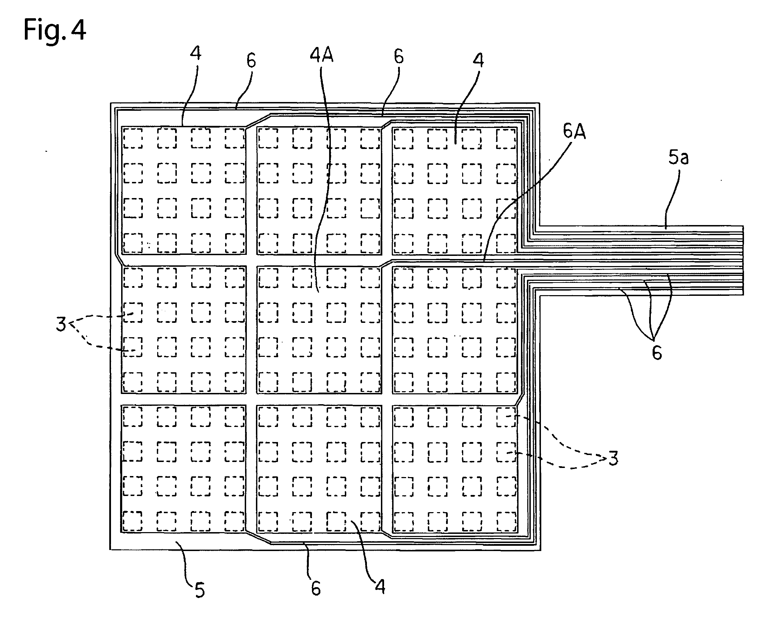

A flexible wiring board 5, which is formed from a transparent synthetic resin material, is attached along a rear surface of the insulating case 2. As shown in FIG. 4, a matrix of 3 rows by 3 columns providing nine electrostatic capacitance detection electrodes 4, each of which is a transparent indium tin oxide (ITO) electrode, is formed on a front surface of the insulating case 2 of the flexible wiring board 5 that opposes the rear surface thereof. All of the electrostatic capacitance detection electrodes 4 are formed with identical square outlines and with identical front surface areas (projection surface areas that are projected to the insulating case 2).

A flexible tail 5a, one end of which is connected to an FPC connector 8, is formed integrally with the flexible wiring board 5, and lead-out patterns 6, each of which is made of transparent silver patterns that lead out from the electrostatic capacitance detection electrodes 4, are printed along the longitudinal direction of the flexible tail 5a. As illustrated in FIGs. 1 and 2, one end of the flexible tail 5a is connected to the flexible printed circuited (FPC) connector 8, which is mounted on a printed wiring board 7, and thereby the electrostatic capacitance detection electrodes 4 are connected to an electrostatic capacitance position detection circuit 9A of a controller 9, which is mounted on the rear surface side of the printed wiring board (PWB) 7, via the lead-out patterns 6. Each lead-out pattern 6 is narrowly formed, and its front surface area is extremely small compared with that of each electrostatic capacitance detection electrode 4.

The printed wiring board 7 of FIGs. 1 and 2 is disposed so that it is parallel to the insulating case 2 and downwardly spaced apart from the flexible wiring board 5 by a prescribed spacing, and 144 light emitting diodes 3 are mounted on the front surface of the printed wiring board 7 in a matrix of 12 rows by 12 columns. As shown in FIG. 4, 16 units of the light emitting diodes 3 are disposed below each of the electrostatic capacitance detection electrodes 4 in a matrix of 4 rows by 4 columns.

A driver 11, which is shown in FIG. 3, individually controls the flashing of each of the 144 light emitting diodes 3; therefore, display control signals are output from a display control circuit 9B, which is included in the controller 9, to the driver 11, and thereby the combination of light emitting diodes 3 that are turned on is controlled so that a prescribed character or graphic is displayed.

The controller 9, which comprises the electrostatic capacitance position detection circuit 9A and the display control circuit 9B, is configured by a single chip microcontroller and is mounted to the printed wiring board 7 on the rear surface side. The electrostatic capacitance position detection circuit 9A outputs detection values that are in accordance with the electrostatic capacitance between each of the electrostatic capacitance detection electrodes 4 and ground, and determines that an input operation has been performed when the maximum value of each detection value exceeds a prescribed input determination value. Here, the input determination value may be set to a value such that it is determined that an input operation has been performed when a finger approaches a position that is approximately 10 cm from the front surface of the insulating case 2.

If it is determined that an input operation has been performed, the input operation position thereof is detected subsequently. Here, the front surface area of all of the electrostatic capacitance detection electrodes 4 are identical, and it is therefore assumed that the electrostatic capacitance detection electrode 4 that has the maximum detection value is the one that is most proximate to the operating finger, and the array position of that electrostatic capacitance detection electrode 4 is detected as the input operation position. This input operation position may optionally be derived more accurately from the centroid of the detection values of the electrostatic capacitance detection electrodes 4. In addition, after it is determined that an input operation has been performed, the input operation position is detected at fixed intervals, and an input operation direction may be detected based on detecting changes in the input operation position.

The controller 9 outputs prescribed operation data that correspond to the detected input operation position or the input operation direction to a processing apparatus (PC) 13, which executes a prescribed process based on the operation data, via an interface 12, and outputs a display control signal that corresponds to the detected input operation position or the input operation direction from the display control circuit 9B to the driver 11 for operating the LEDs 3.

The operation of the noncontact input apparatus 1 configured in this manner will now be explained. During a standby state-when the finger is not brought close to the insulating case 2-a conductor that is at ground potential does not approach the electrostatic capacitance detection electrodes 4, and therefore the electrostatic capacitance detected from each of the electrostatic capacitance detection electrodes 4 is extremely low and none of the detection values reaches the input determination value. During this time, the noncontact input apparatus 1 determines that the state is the standby state, wherein an input operation is not performed, and the display control circuit 9B performs control so as to turn off all of the light emitting diodes 3. Accordingly, light is not emitted to the translucent insulating case 2 from the interior, only the front surface of the case 2 is visible, and the structure of the input apparatus 1 therein does not appear on the front surface side.

In order to perform an input operation on the noncontact input apparatus 1, an operator brings his or her finger close to the front surface of the insulating case 2; as the finger approaches, the electrostatic capacitance to ground through the body of the operator gradually increases; when the finger approaches within 10 cm of the front surface of the insulating case 2, the detection value that corresponds to the electrostatic capacitance of the electrostatic capacitance detection electrode 4 that is closest to the finger exceeds the input determination value, whereupon the electrostatic capacitance position detection circuit 9A determines that an input operation has been performed. Because the electrostatic capacitance detection electrode 4 for which the maximum detection value is detected at this time is the one that is closest to the approaching finger, and therefore the array position of that electrostatic capacitance detection electrode 4 is detected as the input operation position.

If the display control circuit 9B of the controller 9 detects the input operation and the input operation position, then it outputs a display control signal that performs control so as to turn on the 16 light emitting diodes 3 disposed below the electrostatic capacitance detection electrode 4 at the input operation position to the driver 11, and these light emitting diodes 3 emit light. The light emitted from the 16 light emitting diodes 3 passes through the transparent flexible wiring board 5 and that transparent electrostatic capacitance detection electrode 4, and irradiates the rear surface of the translucent insulating case 2; thereby, a square graphic below the operating finger is displayed through the insulating case 2. Accordingly, the operator can know-without touching the insulating case 2 of the portable telephone-that the input operation and the input operation position have been detected by the noncontact input apparatus 1.

In the controller 9, while the electrostatic capacitance position detection circuit 9A is detecting whether an input operation has been performed, i.e., as long as the maximum value of each detection value is less than the input determination value, it detects the input operation position periodically with the same method, and if the input operation position changes over time, then an operation direction of the input operation is also detected.

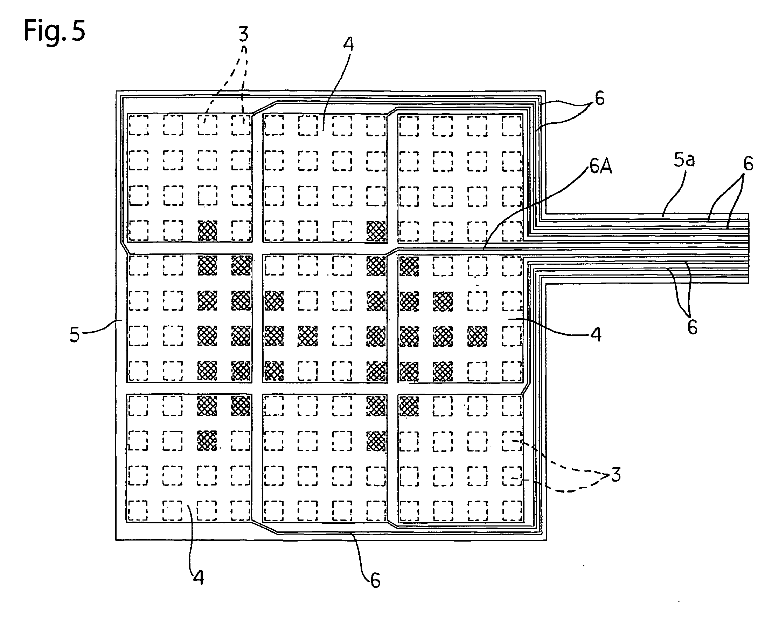

Here, for example, if the array positions of the three electrostatic capacitance detection electrodes 4 in any row shown in FIG. 4 are detected as the input operation positions in sequence from left to right within one second, then it is determined that an input operation has been performed above the insulating case 2 in a direction from left to right, and "fast forward" control data that are associated with the input operation in the direction from left to right may be output to the PC 13. At the same time, for example, the display control circuit 9B of the controller 9 may output a display control signal that displays right-facing triangular marks, which indicate "fast forward," laterally at two locations to the driver 11 and individually control the flashing of the 144 light emitting diodes 3 based on this display control signal. As a result, a display that indicates "fast forward" is shown through the insulating case 2, as shown in FIG. 5, the operator recognizes from this display that an input operation in the left to right direction has been received that requests "fast forward," and the processing apparatus (PC) 13 receives the "fast forward" operation data and fast forwards the sound that is played by the portable telephone.

According to the present embodiment, portable equipment, such as portable telephones for which there is particular demand for size reduction, can be made with a simple design so that the external appearance looks as if an input apparatus is not provided; furthermore, such portable equipment is capable of noncontactually inputting a variety of operation data with a small input operation area.

In the present embodiment of the present invention, the lead-out patterns 6 that lead out from the electrostatic capacitance detection electrodes 4 are disposed along the rear surface of the insulating case 2, which is the surface that opposes the approaching operating body. In particular as illustrated as FIG. 4, a lead-out pattern 6A that leads out from a center electrostatic capacitance detection electrode 4A leads out through a gap that approaches other electrostatic capacitance detection electrodes 4, and therefore the electrostatic capacitances of the electrostatic capacitance detection electrodes 4 that are detected by the electrostatic capacitance position detection circuit 9A fluctuate due to the electrostatic capacitance of the lead-out pattern 6A. Nevertheless, all of the lead-out patterns 6 are formed narrowly and the value of the electrostatic capacitances generated in the lead-out patterns 6 are of a level that can be ignored with respect to the electrostatic capacitances of the electrostatic capacitance detection electrodes 4, and therefore the input operation position with respect to each electrostatic capacitance detection electrode 4 can be detected with substantially no error.

Furthermore, in order to reduce further the detection errors caused by the electrostatic capacitance of the lead-out pattern 6A, the electrostatic capacitance detection electrode 4A that is disposed at the center of the 3 row by 3 column matrix may be omitted. In the case of electrostatic capacitance detection electrodes 4 wherein the centrally disposed electrostatic capacitance detection electrode 4A is omitted, there is no electrostatic capacitance detection electrode 4 that is disposed so that it is surrounded by other electrostatic capacitance detection electrodes 4, and therefore it is possible for the lead-out patterns 6 to lead out to the electrostatic capacitance position detection circuit 9A from the perimeters of the electrostatic capacitance detection electrodes 4 without having to lead out through a gap between other electrostatic capacitance detection electrodes 4.

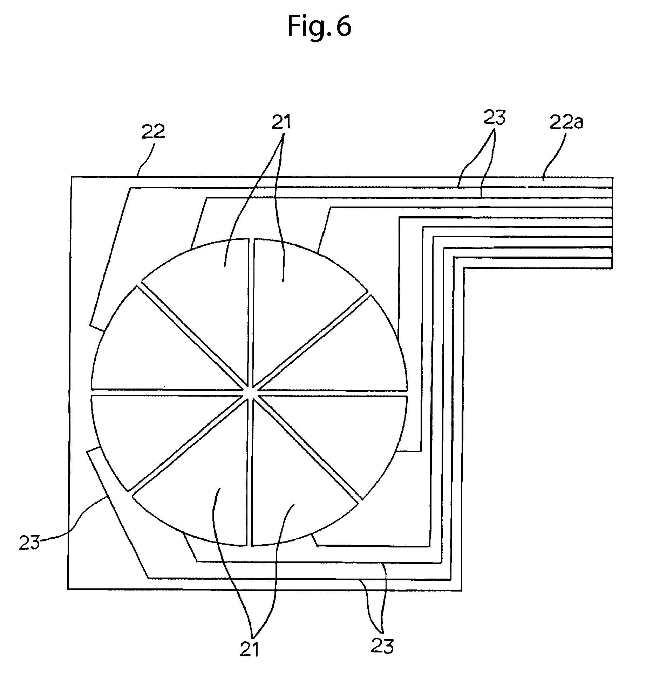

FIG. 6 is a plan view of a flexible wiring board 22 wherein each electrostatic capacitance detection electrodes 21 of a plurality of electrostatic capacitance detection electrodes 21 is disposed so that it is not surrounded by other electrostatic capacitance detection electrodes 21; furthermore, the electrostatic capacitance detection electrodes 4 discussed above may be disposed in the same manner as the electrostatic capacitance detection electrodes 21 shown in FIG. 6.

The electrostatic capacitance detection electrodes 21 are formed by partitioning a circular electrode into eight parts at equiangular intervals so that they form equal fan shapes, and all eight electrostatic capacitance detection electrodes 21 together form a circle; therefore, lead-out patterns 23, each of which leads out from the arcuate perimetric edge of one of the electrostatic capacitance detection electrodes 21, can lead out from a flexible tail 22a such that each lead-out pattern 23 does not approach other electrostatic capacitance detection electrodes 21. Accordingly, even though a plurality of the electrostatic capacitance detection electrodes 21 is formed on one surface of the transparent flexible wiring board 22 wherein no through hole is provided, the electrostatic capacitance between each of the lead-out patterns 23 and other electrostatic capacitance detection electrodes 21 is extremely low, which makes it possible to detect the operation position accurately.

In addition, disposing the identically shaped electrostatic capacitance detection electrodes 21 at equiangular intervals in this manner makes it possible to detect an operation position on the circumference, as well as to detect a rotational operation direction and a rotational operation speed more accurately when the finger performs a rotational operation.

Furthermore, the electrostatic capacitance detection electrodes 4 and the lead-out patterns 6 that lead out therefrom, as well as the electrostatic capacitance detection electrodes 21 and the lead-out patterns 23 that lead out therefrom, which were all discussed above, may be formed directly on the rear surface or within the walls of the translucent insulating case 2.

In addition, the embodiments discussed above explained a case wherein the light emitting source that shows the prescribed display comprises the light emitting diodes 3; however, instead of the light emitting diodes 3, the light emitting source may be some other light emitting device, such as an EL (electroluminescence) light emitting device, as long as it is a self luminous device.

It is within the scope of the present invention to include all foreseeable equivalents to the elements and structures as described with reference to FIGs. 1-6. For example, although the structure illustrated in FIGs. 1, 2, 4 and 5 includes a PWB having an array of 144 LEDs 3, the array may include any number of LED's 3 providing at least one LED 3 for indicating activation of each electrostatic capacitance detection electrode 4.

Preferably, a noncontact input apparatus includes a printed wiring board (PWB) on which preferably a plurality of self luminous devices is mounted. The PWB is preferably covered by a translucent insulating case, and a plurality of transparent electrostatic capacitance detection electrodes is formed along a rear surface of the translucent insulating case. Preferably an input operation position of an operating body is detected based on changes in the electrostatic capacitance between the operating body, which preferably approaches the case, and the plurality of electrostatic capacitance detection electrodes, and preferably control is performed so as to flash multiple ones of the plurality of self luminous devices, and thereby preferably show display a character or other graphic through the insulating case that is in accordance with the input operation position.

## Claims

1. A noncontact input apparatus, comprising:
a plurality of self luminous devices mounted on a printed wiring board;
a translucent insulating case that covers a front surface side of the printed wiring board whereon the plurality of self luminous devices is mounted;
a display control circuit that displays a prescribed character or graphic by individually controlling the flashing of one or more of the plurality of self luminous devices;
a plurality of transparent electrostatic capacitance detection electrodes that is formed on a rear surface of the translucent insulating case; and
a position detection circuit that detects an operation position of an operating body based on changes in the electrostatic capacitance between one or two or more of the electrostatic capacitance detection electrodes and the operating body that approaches the front surface of the translucent insulating case, wherein:
the display control circuit displays a character or a graphic through the translucent insulating case that differs in accordance with the operation position of the operating body detected by the position detection circuit.

2. The noncontact input apparatus according to Claim 1, wherein:
lead-out patterns, which lead out from the electrostatic capacitance detection electrodes to the position detection circuit, on the rear surface of the translucent insulating case or one surface of the transparent insulating sheet are narrowly formed so that the electrostatic capacitance generated by the lead-out pattern and the approaching operating body is substantially less than the electrostatic capacitances generated by the electrostatic capacitance detection electrodes and the approaching operating body.

3. The noncontact input apparatus according to any of claims 1 or 2, wherein the plurality of transparent electrostatic capacitance detection electrodes is formed on one surface of a transparent insulating sheet disposed along the rear surface of the translucent insulating case.

4. The noncontact input apparatus according to any of claims 1 to 3, wherein the plurality of electrostatic capacitance detection electrodes is distributed and formed so that no electrostatic capacitance detection electrode is fully surrounded by other electrostatic capacitance detection electrodes.

5. The noncontact input apparatus according according to any of claims 1 to 4, wherein the position detection circuit is further configured to detect an operation detection based on changes in the operation position of the operating body.

6. The noncontact input apparatus according according to any of claims 1 to 5, wherein the plurality of electrostatic capacitance detection electrodes is distributed in a grid array.

7. The noncontact input apparatus according to claim 6, wherein the grid array comprises nine electrostatic capacitance detection electrodes arranged in three rows and three columns.

8. The noncontact input apparatus according to any of claims 1 to 7, wherein the electrostatic capacitance detection electrodes are configured as equiangular sectors in combination forming a circular area.

9. The noncontact input apparatus according to claim 8, wherein the plurality of electrostatic capacitance detection electrodes comprises eight equiangular sectors forming the circular area.
